Europäisches Patentamt

European Patent Office

Office européen des brevets

(19)

(11) Publication number: **0 171 118**
A2

## (12) EUROPEAN PATENT APPLICATION

(21) Application number: **85201246.7**

(22) Date of filing: **29.07.85**

(51) Int. Cl.⁴: **G 01 N 29/04**

(30) Priority: **09.08.84 GB 8420244**

(43) Date of publication of application: **12.02.86 Bulletin 86/7**

(84) Designated Contracting States: **DE FR GB NL**

(71) Applicant: **SHELL INTERNATIONALE RESEARCH MAATSCHAPPIJ B.V., Carel van Bylandtlaan 30, NL-2596 HR Den Haag (NL)**

(72) Inventor: **van den Berg, Wilhelmus Hendrikus, Badhuisweg 3, NL-1031 CM Amsterdam (NL)**
Inventor: **Homs, Marinus Hubertus, Badhuisweg 3, NL-1031 CM Amsterdam (NL)**
Inventor: **van Oorschot, Bob Pierre Jan, 1 Altens Farm Road, Nigg Aberdeen AB9 2HY (GB)**

(74) Representative: **Aalbers, Onno et al, P.O. Box 302, NL-2501 CH The Hague (NL)**

(54) A transducing device for internal contactless ultrasonic inspection of pipelines or tubings.

(57) A transducing device for internal contactless ultrasonic inspection of pipelines or tubings comprising: means for electromagnetically generating elastic waves within the wall of the pipeline or tubing to be inspected; means for connecting mechanically said device to a means for moving said device through the pipeline or tubing wherein said generating means comprises a magnetic means and at least one transmitting coil, said transmitting coil being arranged on one of the poles of the said magnetic means and wherein, in use, the said poles of the magnetic means are directed to the wall of the pipeline or tubing under inspection.

0171118

K 5746

## A TRANSDUCING DEVICE FOR INTERNAL CONTACTLESS ULTRASONIC INSPECTION OF PIPELINES OR TUBINGS

The invention relates to a transducing device for internal contactless ultrasonic inspection of pipelines or tubings.

Usually, ultrasonic internal inspection of pipelines, risers and the like is carried out by pigs which are moving through the pipeline to be inspected and are provided with means for transmitting ultrasonic pulses to the pipeline wall and means for receiving reflected pulses. The reflected pulses are processed in a suitable way in order to obtain information about the condition of the pipeline wall. Such ultrasonic measurements based upon the reflection principle are known to those skilled in the art and will not be described in detail.

Conventional ultrasonic transducers need an acoustic coupling medium between the transducer and the wall under inspection in order to adapt their respective acoustic impedances. Usually a liquid is used. However, in many situations it is very difficult or even impossible to realize such an acoustic couplant e.g. in a gas environment or on hot surfaces. U.S. Patent Specification 4,092,868 discloses a device for contactless internal ultrasonic inspection of pipelines, said device being provided with a means for inducing electromagnetically ultrasonic energy (so-called "Lamb" waves) in a metal object to be inspected. The "Lamb" waves fill the entire cross section of the object under inspection and are not just a narrow beam of ultrasonic energy. The device as disclosed in U.S. 4,092,868 is not suitable to focus ultrasonic energy in the object under inspection. Therefore, it is an object of the invention to provide an ultrasonic electromagnetic transducer, for internal inspection of pipelines,

- 2 -                    0171118

which requires no acoustic couplant between transducer and tube wall, said device being able to produce and to direct an ultrasonic beam in an accurate manner.

It is another object of the present invention to provide a self-centring ultrasonic electromagnetic transducer for internal inspection of pipelines, capable of passing local obstacles within the said pipeline.

It is another object of the invention to provide an ultrasonic electromagnetic transducer for internal inspection of pipelines or tubings which is not restricted to the use of "Lamb" waves, but generates elastic shear waves in the object under inspection.

The invention, therefore, provides a transducing device for internal contactless ultrasonic inspection of pipelines or tubings characterized by: means for electromagnetically generating elastic waves within the wall of the pipeline or tubing to be inspected; means for connecting mechanically said device to a means for moving said device through the pipeline or tubing wherein said generating means comprises a magnetic means and at least one transmitting coil, said transmitting coil being arranged on one of the poles of the said magnetic means and wherein, in use, the said poles of the magnetic means are directed to the wall of the pipeline or tubing under inspection.

The invention will now be described in more detail by way of example with reference to the accompanying drawings, in which:

fig. 1 represents an axial view of an ultrasonic transducing device of the invention;

fig. 2a represents a cross section of the device of fig. 1 along the lines II-II; and

fig. 2b represents a detail of fig. 2a.

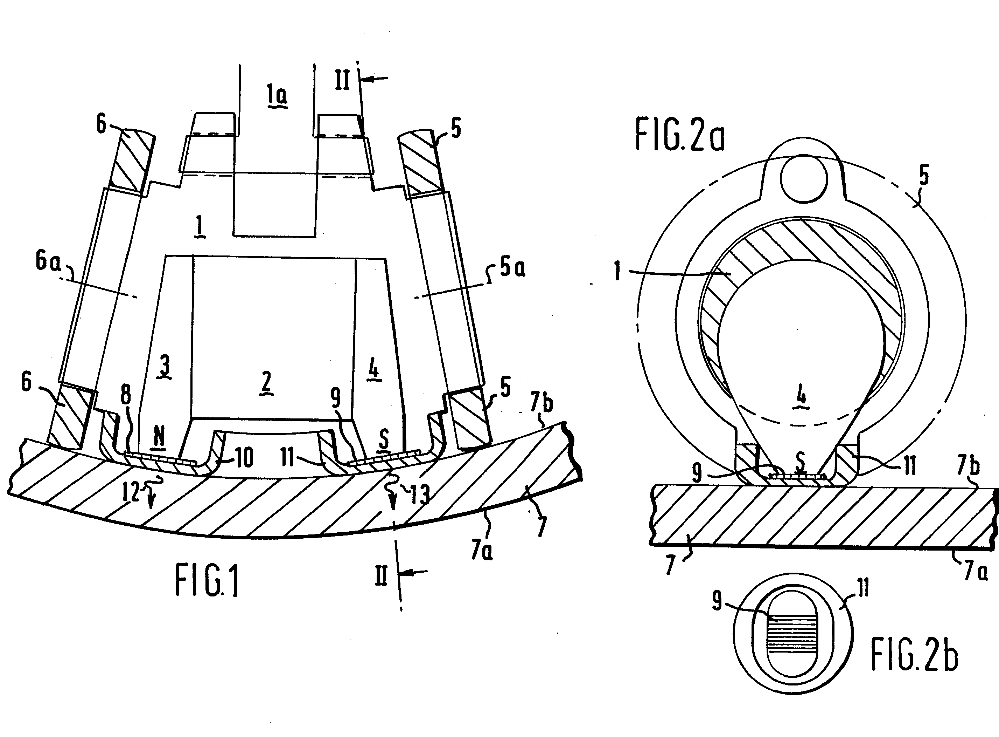

Referring now to fig. 1 a device comprising a housing 1 and a magnetic means has been represented. In this embodiment the magnetic means comprises a (permanent) magnet 2 provided

- 3 - 0171118

with focussing discs 3 and 4 respectively in such a way that a magnetic yoke provided with conical poleshoes n and s is present. The said magnetic means is connected mechanically to the housing 1 by any means suitable for the purpose (not shown for reasons of clarity). The said housing 1 is provided with support or guiding wheels 5 and 6 respectively which support the housing and the magnet against the pipeline wall 7 (shown in cross-section). The wheels 5 and 6 rotate about the axes 5a and 6a respectively (schematically shown). The housing 1 is further connected mechanically in any suitable way to a pigbody for moving the ultrasonic device through the pipeline or tubing under inspection. This mechanical connection may be a hinge 1a. For reasons of clarity the pigbody and mechanical connections have not been shown, whereas only part of the pipeline wall 7 has been represented. Transmitting coils 8 and 9 respectively are arranged on the said conical poleshoes n and s.

The transmitting coils 8 and 9 are arranged in any suitable way on the said poleshoes, which, in use, are directed to the pipeline wall 7b. In advantageous embodiments of the invention the thickness of these coils is 0.1-0.5 mm and a suitable excitation frequency range of the coils is 2-4 MHz.

The device of the invention may also comprise protection cups 10 and 11 respectively for protection of the transmitter coils 8 and 9. Further, receiving coils are arranged on the said conical poleshoes n and s for processing the ultrasonic reflected pulses. (These receiving coils have not been represented for reasons of clarity). The operation of the device of the invention is as follows: The transmitter coils 8 and 9 which are arranged on the said pole shoes n and s of the magnet respectively are excited with a suitable rf pulse, for example 2 MHz, and induce rf eddy currents in the surface of the electrically conductive pipeline wall 7 under inspection. As a continuous magnetic induction is present, Lorentz forces will act on the material under inspection and due to the high excitation frequency of the transmitting coils ultrasonic elastic waves 12 and 13 will be generated in the wall 7.

The ultrasonic waves are reflected against the rear surface 7a of the wall 7 and return to the front surface 7b of the wall 7.

The reverse process then applies for detection, i.e. a voltage is induced in the receiving coil or coils by means of electromagnetic induction and the received signal is processed further in order to derive information on the condition of the pipeline wall. As already indicated earlier, the principle underlying these measurements is known as such to those skilled in the art and will not be discussed further.

Fig. 2a represents a cross section of the embodiment of fig. 1 along the focussing disc 4 (lines II-II). The same reference numerals as in fig. 1 have been used.

Fig. 2b represents the side of the device of fig. 2a which, in use, is directed to the pipeline wall 7b. A linear coil 9 arranged on the pole s of the focussing disc 4 and surrounded by a protection cup 11 have been shown.

It will be appreciated that any shape and dimensions of the magnetic means, transmitting coils and receiving coils suitable for the purpose may be used, provided that at least one transmitting coil is arranged on at least one of the poles of the magnetic means, which, are directed to the pipeline wall.

It will further be appreciated that the invention is not restricted to the embodiment represented in the above figures, in which the poles n and s respectively of the magnetic means (2, 3, 4) are arranged in a direction perpendicular to the longitudinal axis of the pipeline under inspection.

Any arrangement of the poles n and s of the magnetic means suitable for the purpose can be used.

In an advantageous embodiment of the invention the poles n and s of the magnetic means are arranged one behind another in the direction of the longitudinal axis of the pipeline under inspection.

In advantageous embodiments of the invention a so-called pancake (or spirally wound) coil can be used.

It will be appreciated that the transmitter and receiver coils may be combined on one pole of the magnet. Further, the permanent magnet and the focussing discs may be embedded in a suitable material, for example epoxy resin.

In another advantageous embodiment one of the poles of the magnetic means comprises the transmitter coil whereas the other pole comprises the receiving coil. A suitable material for the magnet is low reluctance steel. The portions of the conical poleshoes, which are directed to the pipeline wall, may be made of material for preventing the excitation of eddy currents in the discs. It will be appreciated that the invention is not restricted to the use of a permanent magnet. In an advantageous embodiment of the invention an electromagnet can be used. Various modifications of the present invention will become apparent to those skilled in the art from the foregoing description and accompanying drawings. Such modifications are intended to fall within the scope of the appended claims.

CLAIMS

1. A transducing device for internal contactless ultrasonic inspection of pipelines or tubings characterized by: means for electromagnetically generating elastic waves within the wall of the pipeline or tubing to be inspected; means for connecting mechanically said device to a means for moving said device through the pipeline or tubing wherein said generating means comprises a magnetic means and at least one transmitting coil, said transmitting coil being arranged on one of the poles of the said magnetic means and wherein, in use, the said poles of the magnetic means are directed to the wall of the pipeline or tubing under inspection.

2. The device as claimed in claim 1 characterized in that the said magnetic means comprises focussing discs ending in conical poleshoes.

3. The device as claimed in claim 1 or 2 characterized in that the poles of the said magnetic means are provided with a protection cup.

4. The device as claimed in any one of claims 1-3 characterized in that the said transmitting coil is a pancake (spiral) coil.

5. The device as claimed in any one of claims 1-3 characterized in that the said transmitting coil is a linear coil.

6. The device as claimed in any one of claims 1-5 characterized by at least one receiving coil which is arranged on one of the poles of the said magnetic means.

7. The device as claimed in claim 6 characterized in that the said transmitter coil and the said receiving coil are combined and arranged on the same pole of the said magnetic means.

8. The device as claimed in any one of claims 1-7 characterized in that the said magnetic means is provided with support or guiding wheels.

9. The device as claimed in claims any one of claims 1-8 characterized by a magnetic means of low reluctance steel and wherein the said poles are provided with material for preventing the excitation of eddy currents in the said poles.

10. The device as claimed in any one of claims 2-9 characterized in that the said magnetic means and the focussing discs are embedded in epoxy resin.

EYRH04

FIG.2a

FIG.2b

FIG.1